Europäisches Patentamt

European Patent Office

Office européen des brevets

(11) Publication number: **0 261 985**
**B1**

(12) EUROPEAN PATENT SPECIFICATION

(45) Date of publication of patent specification: **23.01.91**

(51) Int. Cl.⁵: **F 24 D 3/16, A 47 G 27/02**

(21) Application number: **87308520.3**

(22) Date of filing: **25.09.87**

(54) **Soft, heating floor-mats.**

(30) Priority: **26.09.86 JP 146481/86**
**26.09.86 JP 146483/86**
**23.12.86 JP 196765/86**

(43) Date of publication of application:
**30.03.88 Bulletin 88/13**

(45) Publication of the grant of the patent:
**23.01.91 Bulletin 91/04**

(84) Designated Contracting States:
**DE FR GB IT NL SE**

(56) References cited:
**DE-A-2 841 225**
**JP-U-59 116 714**
**JP-U-60 060 608**
**CAHIERS DU CENTRE SCIENTIFIQUE ET**
**TECHNIQUE DU BATIMENT, no. 245, December**
**1983, pages 1-11, "cahier 1906, avis no. 14/82-**
**136", Paris, FR: "Avis sur le système de**
**canalisations en polyéthylène réticulé chauffage**
**par le sol"**

(73) Proprietor: **TOKYO GAS CO., LTD.**
**5-20, Kaigan 1-chome**
**Minato-ku Tokyo 105 (JP)**

(73) Proprietor: **RYOWA CORPORATION**
**5-2, Marunouchi 2-chome Chiyoda-ku**
**Tokyo (JP)**

(72) Inventor: **Aoyama, Kazuo**
**B-505, 2-3, Shin Matsudo 3-chome**
**Matsudo-shi Chiba (JP)**
Inventor: **Murata, Yukitaka**
**27-25, Sunagawa-cho 4-chome**
**Tachikawa-shi Tokyo (JP)**
Inventor: **Hattori, Kiyoshi**
**7-5, Tsukiji 3-chome Chuo-ku**
**Tokyo (JP)**
Inventor: **Okamoto, Akio**
**c/o Ryowa Corporation 5-2, Marunouchi 2-**
**chome**
**Ami-machi Inashiki-gun Ibaraki (JP)**
Inventor: **Takahashi, Kiyoshi**
**c/o Ryowa Corporation 3-2, Chuo 8-chome**
**Ami-machi Inashiki-gun Ibaraki (JP)**
Inventor: **Sasaki, Takashi**
**c/o Ryowa Corporation 3-1, Chuo 8-chome**
**Ami-machi Inashiki-gun Ibaraki (JP)**
Inventor: **Hanari, Shigeko**
**c/o Ryowa Corporation 3-2, Chuo 8-chome**
**Ami-machi Inashiki-gun Ibaraki (JP)**

Courier Press, Leamington Spa, England.

**EP 0 261 985 B1**

(74) Representative: **Moore, Anthony John et al
Gee & Co. Chancery House Chancery Lane
London WC2A 1QU (GB)**

## Description

This invention relates to heating floor-mats which are, in use, laid on a room floor, and more particularly to soft, heating floor-mats using a heating fluid such as warm water as heat transfer medium.

Flexible, soft, heating floor-mats using a heating fluid such as warm water as a heating medium, generally have a structure in which conduits for passing the heating medium are meanderingly disposed in a base sheet which forms a heat insulating layer for the mat, and a covering material is placed on the upper surface thereof. As the base sheet material, expanded polyurethane (see Japanese Laid-Open Utility Model Application No. 96515/85); sponge (see Japanese Laid-Open Utility Model Application No. 146215/85); and non-cross-linked polyethylene foam (see Japanese Laid-Open Utility Model Application No. 60608/85) have been proposed.

As the conduit material, a heat resistant rubber (see Japanese Laid-Open Utility Model Application No. 146215/85) and a synthetic resin, such as polyvinyl chloride and polyethylene (see Japanese Laid-Open Utility Model Application No. 96515/85) have been proposed. Furthermore, it is known to use cross-linked polyethylene (see, e.g., Japanese Laid-Open Utility Model Application No. 116714/84).

However, when using a conventional base sheet for disposition of the conduits, there are encountered such problems as that the base sheet becomes greatly deformed in use due to its poor heat resistance; attempts to impart heat resistance to the material reduce its flexibility, and thus its conformability to the floor and its feeling underfoot; additionally the base sheet material has a high heat transfer factor due to its continuous cell structure, which results in a large heat loss.

Moreover, when the conduit is composed of a rubber or polyvinyl chloride, there arise problems in the reduction of the heat ageing resistance and pressure resistance thereof caused by the action of the heating medium. On the other hand, conduits composed of ordinary polyethylene (density of from 0.910 to 0.925 g/cm$^3$) are insufficiently flexible, which inevitably leads to difficulty in maintaining the flexibility (e.g., rolling up property) of the floor-mat. Accordingly solutions to these problems have been sought.

Furthermore, when using conduits composed of cross-linked polyethyene having high rigidity, there are encountered such problems as that when the conduit expands linearly during passage of heating medium, the heat expansion force is concentrated by transfer at the curved portions of the meandering conduit, and hence the conduit is expanded at the curved portions, rising to deform the mat, whereby the mat feels incongruous and unacceptable.

The aims of this invention are to solve the above-described problems.

The first aim of this invention is to provide a soft, heating floor-mat having improved heat resistance without reduction in the flexibility of the base sheet; allowing less heat loss; and using conduit having greatly improved durability and flexibility, whereby the handling characteristics of the mat are facilitated by excellent flexibility while, at the same time, the mat retains good space heating characteristics even when used together with an ordinary carpet.

The second aim of this invention is to provide as soft, heating floor-mat in which the occurrence of local deformation is prevented.

It has now been discovered that the first aim of this invention can be attained by a soft, heating floor-mat comprising a heat insulating base formed of a thermoplastic resin foam and provided on one side with grooves for the reception of conduit in a meandering pattern, conduit for heating medium disposed in the grooves, and a flexible cover covering the grooved side of the base, characterised in that the thermoplastic resin foam is a cross-linked polyethylene foam containing closed cells and having a degree of expansion of from 10 to 40, and in that the conduit is formed of low density cross-linked polyethylene having a density of less than 0.910 g/cm$^3$.

Furthermore, it has also been discovered that the second aim of this invention described above can be attained by the aforesaid mat, wherein said conduit is disposed in a sinuous path having an amplitude $a$ and a wave pitch $p$ in the range of $1/4d \leqq a \leqq 10d$ and $2d \leqq p \leqq 125d$, wherein $d$ is the outside diameter of the conduit.

An embodiment of the invention will now be described by way of example with reference to the accompanying drawings in which:

Fig. 1 is a schematic plan view of a soft, heating floor-mat of this invention with the cover material partially peeled back;

Fig. 2 is a sectional view taken along line A—A in Fig. 1; and,

Fig. 3 is a partial, enlarged plan view of a conduit showing the disposition thereof.

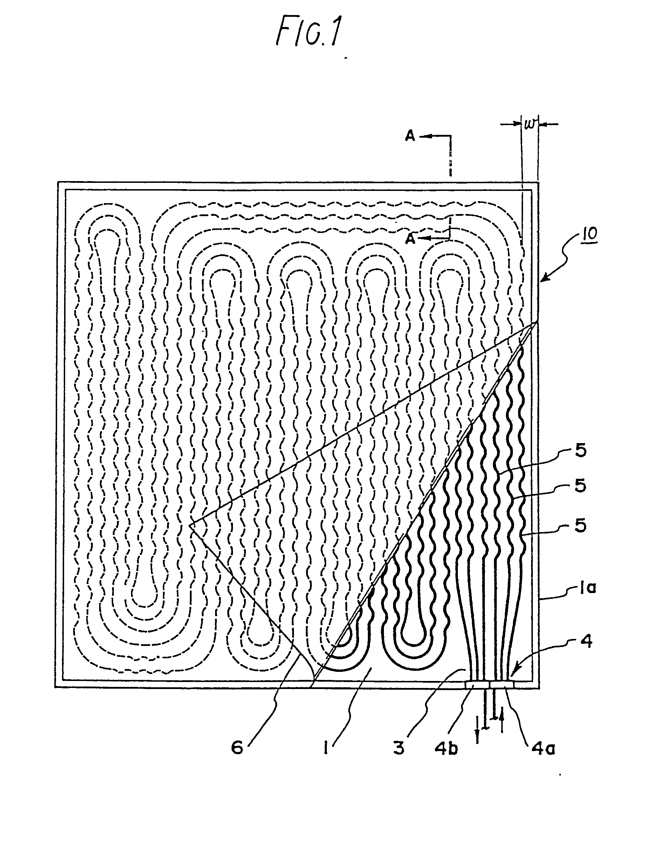

In Fig. 1 and Fig. 2, a base sheet 1 which forms a heat insulating layer of a soft, heating floor-mat 10 is formed of a cross-linked polyethylene foam containing closed cells and having a degree of expansion of from 10 to 40, and on the upper surface of the base sheet 1 are formed three to five conduit-receiving grooves 2 in paths corresponding to the meandering pitch, the wave pitch, and the amplitude of conduits 5 which are meanderingly and sinuously disposed therein. It will be noted that the area in which the conduits 5 are disposed is inset from the margin 1a of the base sheet 1. In the case of the illustrated embodiment there are three conduit-receiving grooves 2 and these grooves 2 are meanderingly and sinuously formed parallel to one another, and both ends of each groove 2 meet at a junction portion 3 of the margin 1a at which a header 4 is provided.

In each groove 2, there is disposed a conduit 5 for passing heating medium such as warm water, the conduit 5 being formed of low density cross-linked polyethylene having a density of from 0.880 to 0.910 g/cm$^3$.

The meandering pitch of the conduits 5 is from 30 mm to 100 mm, and preferably from 30 mm to 80 mm; the interval $w$ between the position of the outermost conduit 5 and the margin $1a$ of the base sheet 1 is generally from 20 mm to 100 mm, and preferably from 30 mm to 80 mm; and the inlet portion and the outlet portion of each conduit 5 are connected to an inlet portion $4a$ and an outlet portion $4b$ of the header 4, respectively.

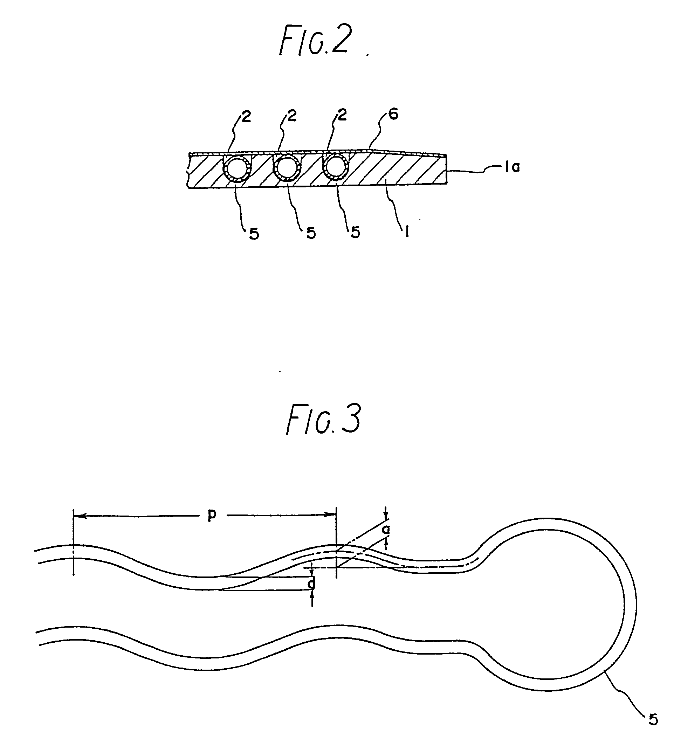

Furthermore, as shown in Fig. 3, the conduits 5 are sinuously disposed in the grooves 2 with the amplitude $a$ and the wave pitch $p$ of the conduit 5 itself being in the defined range of $1/4d \leqq a \leqq 10d$ and $2d \leqq p \leqq 125d$, wherein $d$ is the outside diameter of the conduit 5.

Disposed over the surface of the base sheet 1 is a cover 6 which may be formed of a flexible gas-permeable sheet material such as non-woven fabric or woven fabric, or of a water-impermeable sheet material such as a thermoplastic resin foamed sheet, a thermoplastic resin film or aluminium foil.

If the degree of expansion of the cross-linked polyethylene foam material from which the base sheet 1 is formed is less than 10, the base sheet will lack flexibility; while if the degree of expansion thereof is over 40, the base sheet 1 will lack compression resistance. In addition, the gel fraction of the base sheet material 1 should be from about 40% to about 90%, and the thickness thereof from about 3 mm to about 20 mm.

Also, if the density of the cross-linked polyethylene from which the conduits 5 are formed is higher than 0.910 g/cm³, the conduits 5 will lack flexibility, which results in a reduction in the flexibility of the mat 10.

In addition, when the thickness of the base sheet 1 is, for example, about 10 mm, the outside diameter of the conduit 5 is about 8 mm and the inside diameter thereof is about 5 mm, the raw material resin for forming the conduit 5 is preferably constituted by a copolymer of ethylene and an α-olefin, and the gel fraction thereof is from about 60% to about 90%.

Also, if the meandering pitch is less than 30 mm, the length of the disposed conduit 5 becomes too long, whereby the pressure loss in the heating medium is increased and also the flexibility of the mat 10 itself is reduced; while if the meandering pitch is over 100 mm, heat conduction from the conduit 5 to the cover material 6 is insufficient.

Furthermore, if the distance $w$ between the margin $1a$ and the outermost extent of the disposed conduit 5 is less than 20 mm, trimming when laying the mat 10 becomes difficult; while if the aforesaid distance $w$ is over 100 mm, heat conduction from the conduit 5 to the peripheral portion of the mat 10 is insufficient.

Also, if the amplitude $a$ of the conduit 5 itself is less than $1/4d$, the conduit 5 becomes substantially straight, whereby the effect of distributing the heat expansion force in all directions over the whole length of the conduit is not obtained; while if the amplitude $a$ is over $10d$, the path of the conduit becomes complicated and a practicable conduit pattern is not obtained.

On the other hand, if the wave pitch $p$ of the conduit 5 is less than $2d$, the piping work becomes difficult and loses practicability, and also the dispersion effect for the heat expansion force of the conduit 5 becomes less. Moreover, if the wave pitch $p$ is over $125d$, the dispersion effect for the heat expansion force of the conduit 5 is reduced.

The process of laying the heating soft floor mat of this invention will now be described. In, for example, a six-mat room (approximately 10 m² in area), the mat 10 is laid at the central portion of the floor space corresponding to a two to three-mat area (approximately 3 to 5 m²) and an underlay, such as the same base sheet without conduit or felt, is laid on the surrounding floor area between the margins of the mats 10 and the edges of the floor, the underlay having its upper surface at the same height as that of the mat 10. When felt is used, the marginal portions of the mat 10 are formed with a gentle downward slope, as shown in Fig. 2, so that the thickness at the margins $1a$ thereof is thinner by 1 mm to 2 mm than the thickness of the adjacent felt.

On the other hand, if a heat non-radiating portion having no conduits 5 is formed by extending the base sheet 1 at the periphery of the heating floor-mat 10 so that the area of the heat non-radiating portion is from 15% to 75% of the sum of the area thereof and the mat 10, the mat 10 can be laid over the whole floor without using the underlay as described above; this arrangement is very effective for improving habitability. Also, as the heat non-radiating portion of this type of floor-mat can be trimmed to fit the room, the floor-mat can conveniently be laid of the floor of a room during the construction of a house.

Thus, when the heating mat 10 of this invention is directly laid on the floor of a room, an ordinary carpet is laid thereon, and a heating medium is passed through the conduits 5, the carpet is warmed through the cover material 6 to provide a comfortable heated atmosphere.

As described above, by passing a heating medium through the conduits, not only is the cover material heated to provide a good heated atmosphere, but also, as the base sheet which is the heat insulating layer of the mat, is formed of a cross-linked polyethylene foam containing closed cells and having a degree of expansion of 10 to 40, the base sheet exhibits excellent flexibility, heat resistance, and also overall heat transfer to the under-side is reduced. Accordingly, the problem of thermal deformation in use is solved, while heat loss is reduced. Also, heat radiated from the conduits is efficiently transmitted to the cover material side.

Furthermore, since the conduits for passing heating medium are formed from low density cross-linked polyethylene having a density of less than 0.910 g/cm³, the conduits exhibit excellent ageing resistance, pressure resistance and flexibility, and thus the durability and flexibility of the mat is improved.

Moreover, since the conduits are sinuously disposed, the heat expansion force of the conduit is dispersed throughout its whole length by virtue of its sinuous formation, wherbey the difficulty incurred by concentrating the heat expansion force at the curved portions of the conduits is avoided, and deformation of the mat caused by local rising (buckling) of the conduits is completely prevented.

Finally, as the mat of this invention has excellent flexibility, can be rolled up to a considerable extent and is light in weight, it has the advantage of being convenient for transportation and storage; moreover it can be safely used for a long period of time. Thus, the practical value of this invention is very great.

**Claims**

1. A soft, heating floor-mat comprising a heat insulating base formed of a thermoplastic resin foam and provided on one side with grooves for the reception in a meandering pattern, conduit for heating medium disposed in the grooves, and a flexible cover covering the grooved side of the base, characterised in that the thermoplastic resin foam is a cross-linked polyethylene foam containing closed cells and having a degree of expansion of from 10 to 40, and in that the conduit is formed of low density cross-linked polyethylene having a density of less than 0.910 g/cm³.

2. A mat as claimed in Claim 1, wherein said conduit is disposed in a sinuous path having an amplitude $a$ and a wave pitch $p$ in the range of $1/4d \leq a \leq 10d$ and $2d \leq p \leq 125d$, wherein $d$ is the outside diameter of the conduit.

3. A mat as claimed in Claim 1 or 2, wherein the meandering pitch of the conduit is from 30 mm to 80 mm.

**Patentansprüche**

1. Weiche Bodenheizmatte, bestehend aus einer wärmeisolierenden Unterlage aus einem themoplastischen Kunstharzschaum, die auf einer Seite mit einem meanderförmigen Rillenmuster zur Aufnahme einer Leitung für ein Heizmedium versehen ist, und einer flexiblen Abdeckung, die die mit den Rillen versehene Seite der Unterlage abdeckt, dadurch gekennzeichnet, daß der thermoplastische Kunstharzschaum eine geschlossenzelliger, vernetzter Polyethylenschaum ist und einen Ausdehnungskoeffizienten zwischen 10 und 40 aufweist und daß die Leitung aus einem vernetzten Polyethylen niedriger Dichte besteht, das eine Dichte von weniger als 0,910 g/cm³ aufweist.

2. Matte nach Anspruch 1, bei der die Leitung in einem sinusförmigen Weg angeordnet ist, der eine Amplitude $a$ und eine Wellenlänge $p$ im Bereich von $1/4d \leq a \leq 10d$ und $2d \leq p \leq 125d$ aufweist, wobei $d$ der Außendurchmesser der Leitung ist.

3. Matte nach Anspruch 1 oder 2, bei der die Meander der Leitung Wellen einer Länge von 30 mm bis 80 mm aufweisen.

**Revendications**

1. Tapis moelleux chauffant, comprenant un élément de base isolant de la chaleur, fait en une mousse de résine thermoplastique et pourvu sur l'une de ses faces de sillons destinés à la réception d'une configuration en forme de méandres, une canalisation pour le milieu de chauffage disposée dans les sillons, et un couvercle flexible recouvrant la face de l'élément de base comportant les sillons, caractérisé par le fait que la mousse de résine thermoplastique est une mousse de polyéthylène réticulé contenant des cellules fermées et ayant un degré de dilatation pouvant aller de 10 à 40, et en ce que la canalisation est en polyéthylène réticulé basse densité ayant une densité inférieure à 0,910 g/cm³.

2. Matelas tel que revendiqué dans la revendication 1, dans lequel la canalisation est disposée dans un circuit sinueux d'amplitude $a$ et de pas $p$, s'étendant entre des limites définies par $1/4d \leq a \leq 10d$ et $2d \leq p \leq 125d$, où $d$ est le diamètre extérieur de la canalisation.

3. Matelas tel que revendiqué dans l'une des revendications 1 ou 2, dans lequel le pas des méandres de la canalisation peut aller de 30 mm à 80 mm.

# FIG.1

FIG.2

FIG.3